(19)

**Europäisches Patentamt**
**European Patent Office**
**Office européen des brevets**

(11) **EP 4 550 027 A1**

(12) **EUROPEAN PATENT APPLICATION**
published in accordance with Art. 153(4) EPC

(43) Date of publication:
**07.05.2025 Bulletin 2025/19**

(21) Application number: **23830742.5**

(22) Date of filing: **16.03.2023**

(51) International Patent Classification (IPC):
*G02B 27/01* (2006.01)       *G02B 5/00* (2006.01)
*G02B 5/32* (2006.01)         *G03H 1/02* (2006.01)
*H04N 5/64* (2006.01)

(52) Cooperative Patent Classification (CPC):
G02B 5/00; G02B 5/32; G02B 27/01; G03H 1/02;
H04N 5/64

(86) International application number:
**PCT/JP2023/010420**

(87) International publication number:
**WO 2024/004288 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2022 JP 2022104938**

(71) Applicant: **Panasonic Intellectual Property
Management Co., Ltd.
Kadoma-shi, Osaka 571-0057 (JP)**

(72) Inventors:
• **MINAMI, Kazuhiro**
 **Kadoma-shi, Osaka 571-0057 (JP)**
• **KUZUHARA, Satoshi**
 **Kadoma-shi, Osaka 571-0057 (JP)**
• **KASAZUMI, Ken'ichi**
 **Kadoma-shi, Osaka 571-0057 (JP)**
• **IMAWAKA, Kosuke**
 **Kadoma-shi, Osaka 571-0057 (JP)**

(74) Representative: **Eisenführ Speiser
Patentanwälte Rechtsanwälte PartGmbB
Gollierstraße 4
80339 München (DE)**

(54) **OPTICAL SYSTEM AND IMAGE DISPLAY DEVICE**

(57) There is provided an optical system and an image display device which can improve a usage efficiency of an image light ray from a display element. A light guide (5) of an optical system includes an exit extension region (53) including a diffraction structure dividing an image light ray (L1B) entering a body (50) via an incident region (51) and propagating in a first propagation direction intersecting a thickness direction of the body (50), into a plurality of image light rays (L1C) propagating in a second propagation direction intersecting the first propagation direction, in the first propagation direction, and allowing them to emerge from the light guide (5). At least one part of the exit extension region (53) satisfies that when refractive indices of media on individual incident and exit sides of an image light ray relative to the exit extension region (53) are assumed to be equal to each other, an exit angle θ_out of an image light ray (L1C) emerging from the exit extension region (53) at the highest diffraction efficiency in a predetermined plane (P1) including a normal line (N) of the exit extension region (53) is equal to or greater than 15° and is equal to or smaller than 45°, and an incident angle θ_in of an image light ray (L1B) incident on the exit extension region (53) in the predetermined plane (P1) is greater than the exit angle θ_out by 14° or more.

Fig. 3

**Description**

TECHNICAL FIELD

The present disclosure relates to optical systems and image display devices.

BACKGROUND ART

Conventionally, disclosed is a vehicle information projection system which realizes augmented reality (AR) display by use of a head-up display device. The head-up display device projects light representing a virtual image (an image light ray from a display element) on a wind shield of a vehicle to allow a driver to watch the virtual image together with a real view of an outside of the vehicle, for example.

Patent literature 1 discloses a display system displaying a virtual image and also discloses changing a traveling direction of light by diffracting light emerging from the waveguide (light guide) by use of a diffraction element.

CITATION LIST

PATENT LITERATURE

PATENT LITERATURE 1: JP 2018-506068 A

SUMMARY OF INVENTION

TECHNICAL PROBLEM

In the display system disclosed in patent literature 1, it is desired to improve a usage efficiency of an image light ray from a display element.

The present disclosure is to provide an optical system and an image display device which can improve a usage efficiency of an image light ray from a display element.

SOLUTION TO PROBLEM

An optical system according to one aspect of the present disclosure includes a light guide for guiding an image light ray which is output from a display element and forms an image, to a field of view region of a user as an optical image. The light guide includes: a body having a plate shape; an incident region formed at the body and allowing the image light ray to enter the body so that the image light ray propagates inside the body; and an exit extension region formed at the body and including a diffraction structure dividing an image light ray propagating in a first propagation direction intersecting a thickness direction of the body, into a plurality of image light rays propagating in a second propagation direction intersecting the first propagation direction, in the first propagation direction, and allowing them to emerge from the light guide. At least one part of the exit extension region satisfies that when a refractive index of a medium on an incident side of an image light ray relative to the exit extension region and a refractive index of a medium on an exit side of an image light ray relative to the exit extension region are assumed to be equal to each other, an exit angle $\theta\_out$ of an image light ray emerging from the exit extension region at a highest diffraction efficiency in a predetermined plane including a normal line of the exit extension region is equal to or greater than 15° and is equal to or smaller than 45°, and an incident angle $\theta\_in$ of an image light ray incident on the exit extension region in the predetermined plane is greater than the exit angle $\theta\_out$ by 14° or more.

An image display device according to an aspect of the present disclosure includes the aforementioned optical system and the display element.

ADVANTAGEOUS EFFECTS OF INVENTION

Aspects of the present disclosure can improve a usage efficiency of an image light ray from a display element.

BRIEF DESCRIPTION OF DRAWINGS

Fig. 1 is a schematic view of a configuration example of a movable object including an image display device according to one embodiment.

Fig. 2 is an explanatory view of an optical path of an image light ray output from a display element of the image display device of Fig. 1.

Fig. 3 is a perspective view of a configuration example of a light guide of the image display device of Fig. 1.

Fig. 4 is a schematic plan view of the light guide of Fig. 3.

Fig. 5 is an explanatory view of a volume holographic element.

Fig. 6 is a graph representing a relation between an incident angle and an exit angle.

Fig. 7 is an explanatory view of diffraction effect of an image light ray by an exit extension region of the light guide of Fig. 3.

Fig. 8 is an explanatory view of diffraction effect of an image light ray by an exit extension region of a light guide of a comparative example.

Fig. 9 is a graph representing one example of a relation between an incident angle of an image light ray to the exit extension region and a proportion of a -1st order (first negative order) diffraction light.

Fig. 10 is a graph representing one example of a relation between a diffraction pitch and a diffraction efficiency.

Fig. 11 is an explanatory view of an incident angle and an exit angle of an image light ray in an XZ plane of the light guide of Fig. 3.

Fig. 12 is an explanatory view of an incident angle and an exit angle of an image light ray in a YZ plane of the light guide of Fig. 3.

Fig. 13 is a schematic explanatory view of a surface-relief diffraction grating.

DESCRIPTION OF EMBODIMENTS

Hereinafter, embodiments will be described in detail with reference to appropriate drawings. Note that, description more detailed than necessary will be omitted. For example, detailed description of well-known matters or duplicate description of substantially the same components may be omitted. This aims to avoid the following description from becoming more redundant than necessary and to facilitate understanding of persons skilled in the art. The inventor(s) provides the following description and attached drawings for making persons skilled in the art understand the present disclosure only and has no intention to limit subject matters claimed in claims.

A positional relationship such as an upward, downward, left, or right direction is assumed to be based on a positional relationship illustrated in Figures, unless otherwise noted. Figures referred to in the following embodiments are schematic figures. There is no guarantee that size or thickness ratios of individual components in each Figure always reflect actual dimensional ratios thereof. The dimensional ratios of the individual components are not limited to those illustrated in Figures.

In the present disclosure, expressions "travel in _ direction" and "propagate in _ direction" used in relation to light rays mean that a light ray forming an image travels in the _ direction as a whole and therefore light beams included in the light ray forming the image may be permitted to be inclined relative to the _ direction. For example, regarding a "light ray traveling in _ direction", it is sufficient that a main light beam of this light is directed in the _ direction, and auxiliary beams of this light may be inclined relative to the _ direction.

[1. EMBODIMENTS]

[1.1 CONFIGURATION]

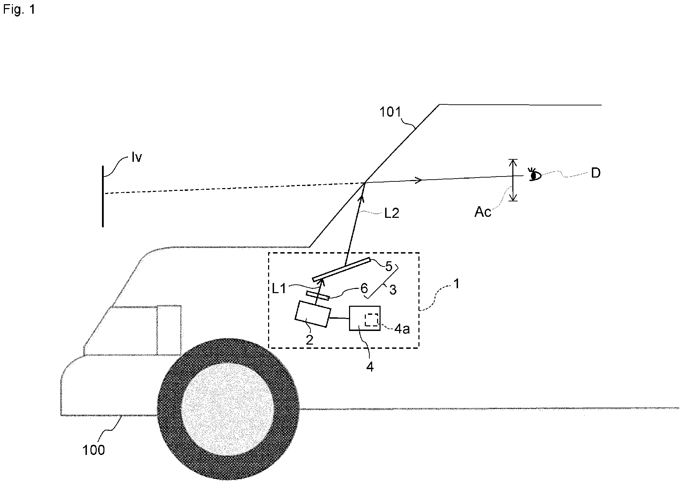

Fig. 1 is a schematic view of a movable object 100 including an image display device 1 according to the present embodiment. The movable object 100 of Fig. 1 is an automobile. Hereinafter, only to facilitate understanding, the movable object 100 may be referred to as the automobile 100. The image display device 1 of Fig. 1 is a head-up display (HUD) to be used in the automobile 100.

The image display device 1 of Fig. 1 is set inside a cabin of the automobile 100 to project an image to a windshield 101 of the automobile 100 from below. In Fig. 1, the image display device 1 is placed inside a dashboard below the windshield 101. When an image is projected from the image display device 1 to the windshield 101, a user D (a driver, or observer) can perceive visually the image reflected by the windshield 101. The user D perceives the image projected by the image display device 1 as a virtual image Iv. Consequently, the image display device 1 displays the virtual image Iv by overlapping it with a real view which can be visually perceived through the windshield 101.

The image display device 1 of Fig. 1 includes a display element 2, an optical system 3, and a control device 4.

The display element 2 is configured to, in order to display an image (picture), output an image light ray L1 for forming an image. Herein, in Fig. 1, only for simplification, the image light ray L1 is depicted as a light ray with directivity but in fact it may be incident on the optical system 3 as a light ray with an angle corresponding to a field of view angle. An optical axis of the display element 2 is an optical axis of the image light ray L1. The optical axis of the image light ray L1 is an optical axis of a ray output from a center of the display element 2, for example. Examples of the display element 2 may include known displays such as liquid crystal displays, organic EL displays, scanning MEMS mirrors, LCOS (Liquid Crystal On Silicon), DMD (Digital Mirror Device), Micro LED, or the like. The image resulting from the image light ray L1 may visually indicate various information such as, road traveling guide indication, a distance to the vehicle ahead, a remaining amount of a vehicle battery, and a current speed of a vehicle.

The optical system 3 is configured to guide the image light ray L1 output from the display element 2 toward a field of view region Ac set relative to eyes of a user. Within the field of view region Ac, the user can watch by his or her own eyes the image formed by the display element 2 with the image not being interrupted. Hereinafter, if necessary, to distinguish an image light ray emerging from the optical system 3 from the image light ray L1 output from the display element 2 toward the optical system 3, the image light ray emerging from the optical system 3 may be denoted by a reference sign L2.

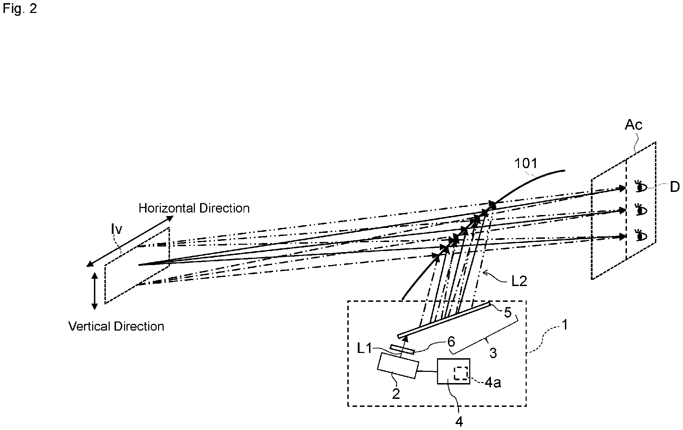

Fig. 2 is an explanatory view of optical paths of image light rays L2 output from the optical system 3 of the image display device 1. In the present embodiment, the optical system 3 expands the field of view region Ac by a pupil expansion effect. In summary, the optical system 3 expands the field of view region Ac by reproducing a pupil of the image light ray L1. In the present embodiment, the field of view region Ac is defined by a rectangular plane. Within the field of view region Ac, the image by the image light ray L1 can be visually perceived even when a position of the user D' eye is shifted in a horizontal direction or a vertical direction in Fig. 2.

As shown in Fig. 1, the optical system 3 includes a light guide 5 and a projection optical system 6.

The light guide 5 is configured to guide the image light ray L1 which is output from the display element 2 and forms the image, toward the field of view region Ac of the user, as an optical image. In the present embodiment, the optical image is the virtual image Iv.

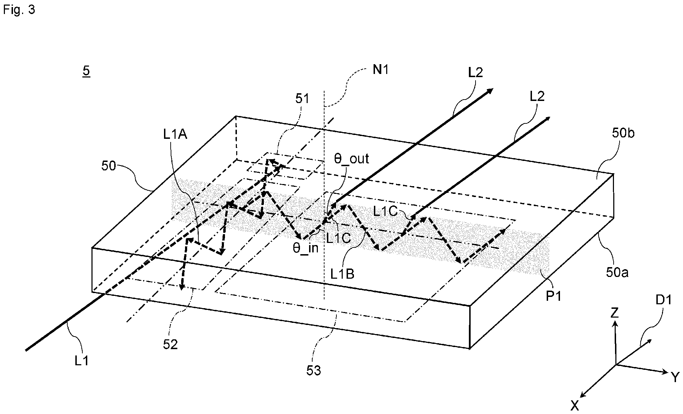

Fig. 3 is a perspective view of a configuration example of the light guide 5. In explanation of the light guide 5, orthogonal coordinates with three axes of XYZ described in Fig. 3 is referred to.

As shown in Fig. 3, the light guide 5 includes a body 50, an incident region 51, an auxiliary extension region 52, and an exit extension region 53.

The body 50 is made of material transparent in a visible light region. The body 50 has a plate shape. In the present embodiment, the body 50 has a rectangular plate shape. The body 50 includes a first surface 50a and a second surface 50b in a thickness direction of the body 50. The thickness direction of the body 50 is a z-axis direction in Fig. 3. The body 50 is positioned or arranged to direct the first surface 50a toward the display element 2 and the second surface 50b toward the field of view region Ac. In this case, the first surface 50a is an incident surface where the image light ray L1 is incident on the body 50, and the second surface 50b is an exit surface where the image light ray L2 emerges from the body 50. In the present embodiment, the light guide 5 is positioned to guide the image light ray L2 emerging from the body 50 to the field of view region Ac as the virtual image Iv by reflecting the image light ray L2 by a light-transmissive member. Therefore, it is possible to allow the user D to watch, from the field of view region Ac, the virtual image Iv by overlapping it with a real view which can be visually perceived through the light-transmissive member. In the present embodiment, the light-transmissive member is the windshield 101 but the light-transmissive member may not be limited to the windshield 101 and may be a member which is transparent in a visible light region (however, is not limited to being colorless and transparent), such as a combiner or the like.

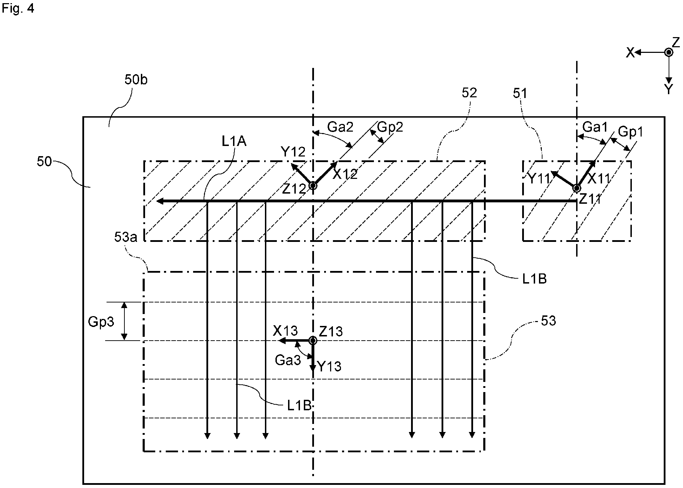

Fig. 4 is a plan view of the light guide 5 when viewed from the second surface 50b. As shown in Fig. 4, the incident region 51, the auxiliary extension region 52, and the exit extension region 53 are formed at the body 50 of the light guide 5.

The incident region 51 is configured to allow the image light ray L1 to enter the body 50 so that the image light ray L1 propagates inside the body 50. In the present embodiment, the incident region 51 allows the image light ray L1 incident on the first surface 50a of the body 50 in a first inclined direction inclined relative to a normal line of the first surface 50a of the body 50, to enter the body 50 so that the image light ray L1 propagates inside the body 50. In the present embodiment, the first inclined direction is direction represented by D1 in Fig. 3. In the present embodiment, the incident region 51 allows the image light ray L1 to enter the body 50 so that the image light ray L1 propagates inside the body 50 in a predetermined direction (a positive direction on the X axis) perpendicular to the thickness direction of the body 50. In Fig. 4, an image light ray propagating in the positive direction on the X axis is denoted by a reference sign L1A. Accordingly, the incident region 51 changes a traveling direction of the image light ray L1 incident on the incident region 51 and allows it to propagate in the predetermined direction inside the body 50 as the image light ray L1A. In the present embodiment, the incident region 51 is used for coupling between the display element 2 and the light guide 5. The incident region 51 allows the image light ray L1 to be incident on the body 50 and propagate within the body 50 under a total reflection condition. The term "coupling" used herein means allowing propagation inside the body 50 of the light guide 5 under a total reflection condition.

The incident region 51 is constituted by a diffraction structure (periodic structure) causing diffraction effect for the image light ray L1. The diffraction structure of the incident region 51 is, for example, a volume holographic element (holographic diffraction grating). The incident region 51 is formed inside the body 50, for example.

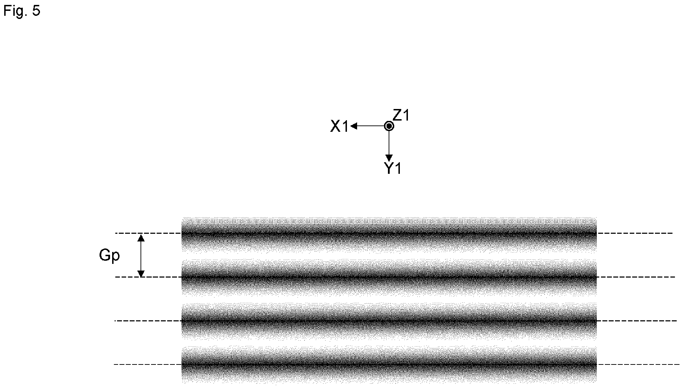

Fig. 5 is a schematic explanatory view of the volume holographic element. The volume holographic element causes diffraction effect owing to a periodic modulation of a refractive index. In Fig. 5, a direction of a Z1 axis is a thickness direction of the volume holographic element. A direction of an X1 axis and a direction of a Y1 axis are perpendicular to the direction of the Z1 axis and are perpendicular to each other. The direction of the X1 axis is a direction where the refractive index of the volume holographic element is unchanged. The direction of the Y1 axis is a direction where the refractive index of the volume holographic element is changed periodically. Gp in Fig. 5 indicates a diffraction period (diffraction pitch) [$\mu$m] of the volume holographic element. The diffraction period of the volume holographic element indicates a period of change in the refractive index of the volume holographic element. The diffraction period of the volume holographic element may be defined by a distance between parts with the maximum refractive index or the minimum refractive index of the volume holographic element, for example.

In Fig. 4, the diffraction period of the volume holographic element of the incident region 51 is denoted by Gp1 and the X1 axis, the Y1 axis and the Z1 axis of the volume holographic element of the incident region 51 are denoted by an X11 axis, a Y11 axis, and a Z11 axis, respectively. A direction of the X11 axis of the volume holographic element of the incident region 51 (the direction where the refractive index is unchanged) intersects the direction of the Y axis in a plane perpendicular to the thickness direction of the body 50 (in an XY plane) at an angle Ga1.

The incident region 51 causes diffraction effect to allow the image light ray L1 to enter the body 50 to be reflected by the first surface 50a and the second surface 50b under a total reflection condition. Owing to the incident region 51, the image light ray L1 travels in the positive direction of the X axis inside the body 50 by being totally reflected by the first surface 50a and the second surface 50b.

A size of the incident region 51 is set to allow part or a whole of the image light ray L1 from the display element 2 through the projection optical system 6 to be incident on the incident region 51. In the present embodiment, as shown in Fig. 4, the incident region 51 has a quadrilateral shape.

The auxiliary extension region 52 is positioned to be arranged in a predetermined direction (the positive direction of the X axis) side by side with the incident region 51. The auxiliary extension region 52 is constituted by a diffraction structure (periodic structure) causing diffraction effect for the image light ray L1A. The diffraction structure of the auxiliary extension region 52 is a volume holographic element (holographic diffraction grating), for example. The auxiliary extension region 52 is formed inside the body 50, for example. In Fig. 4, the diffraction period of the volume holographic element of the auxiliary extension region 52 is denoted by Gp2 and the X1 axis, the Y1 axis and the Z1 axis of the volume holographic element of the auxiliary extension region 52 are denoted by an X12 axis, a Y12 axis, and a Z12 axis, respectively. A direction of the X1 axis of the volume holographic element of the auxiliary extension region 52 (the direction where the refractive index is unchanged) intersects the direction of the Y axis in a plane perpendicular to the thickness direction of the body 50 (in the XY plane) at an angle Ga2.

The auxiliary extension region 52 changes a traveling direction of the image light ray L1A to a first propagation direction and divides the image light ray L1A into a plurality of image light rays. The first propagation direction is a direction intersecting the predetermined direction within a plane perpendicular to the thickness direction of the body 50 (the XY plane). For example, the first propagation direction is a positive direction of the Y axis. In Fig. 4, the image light rays propagating in the positive direction of the Y axis are denoted by a reference sign L1B. Accordingly, the auxiliary extension region 52 is configured to divide the image light ray L1A propagating in the predetermined direction, into the plurality of image light rays L1B propagating in the first propagation direction, in the predetermined direction. The auxiliary extension region 52 allows the plurality of image light rays L1B arranged in the predetermined direction (the positive direction of the X axis) to travel toward the exit extension region 53, by dividing the image light ray L1A propagating inside the body 50 of the light guide 5. By doing so, the auxiliary extension region 52 realizes pupil expansion of the image light ray L1 in the predetermined direction (the positive direction of the X axis). In summary, as shown in Fig. 4, the auxiliary extension region 52 reproduces in the predetermined direction (the positive direction of the X axis), the pupil of the image light ray L1 projected by the projection optical system 6 to expand the pupil by dividing the image light ray L1A into the plurality of image light rays L1B which are substantially parallel to each other and travel toward the exit extension region 53.

A size of the auxiliary extension region 52 is set to allow the image light ray L1A from the incident region 51 to be incident on the auxiliary extension region 52. In one example, a dimension in the Y axis of an end on a side of the incident region 51 (the right end in Fig. 4), of the auxiliary extension region 52 is set to allow a whole of the image light ray L1A diffracted by the incident region 51 to be incident on the auxiliary extension region 52. In the present embodiment, as shown in Fig. 4, the auxiliary extension region 52 has a quadrilateral shape.

The exit extension region 53 is positioned to be arranged in the first propagation direction (the positive direction of the Y axis) side by side with the auxiliary extension region 52. The exit extension region 53 is constituted by a diffraction structure (periodic structure) causing diffraction effect for the image light ray L1B. The diffraction structure of the exit extension region 53 is a volume holographic element (holographic diffraction grating), for example. In Fig. 4, the diffraction period of the volume holographic element of the exit extension region 53 is denoted by Gp3 and the X1 axis, the Y1 axis and the Z1 axis of the volume holographic element of the exit extension region 53 are denoted by an X13 axis, a Y13 axis, and a Z13 axis, respectively. A direction of the X1 axis of the volume holographic element of the exit extension region 53 (the direction where the refractive index is unchanged) intersects the direction of the Y axis in the plane perpendicular to the thickness direction of the body 50 (in the XY plane) at an angle Ga3.

The exit extension region 53 changes a traveling direction of the image light ray L1B to a second propagation direction and divides the image light ray L1B into a plurality of image light rays. The second propagation direction is a direction from the body 50 toward the field of view region Ac. In Fig. 3, the image light rays propagating in the second propagation direction are denoted by a reference sign L1C. The exit extension region 53 allows the plurality of image light rays L1C propagating in the second propagation direction to emerge from the second surface 50b of the body 50 in a second inclined direction inclined relative to a normal line of the second surface 50b of the body 50. In Fig. 3, the image light rays propagating in the second inclined direction are denoted by a reference sign L2. In the present embodiment, the second inclined direction is a direction denoted by D1 in Fig. 3. Therefore, the first inclined direction and the second inclined direction are parallel to each other. Accordingly, the exit extension region 53 is configured to divide the image light ray L1B propagating in the first propagation direction, into the plurality of image light rays L2 propagating in the second propagation direction and emerging from the second surface 50b of the body 50 in the second inclined direction, in the first propagation direction. The exit extension region 53 allows the plurality of image light rays L2 arranged in the first propagation direction (the positive direction of the Y axis) to travel toward the field of view region Ac, by dividing the image light ray L1B propagating inside the body 50 of the light guide 5. By doing so, the exit extension region 53 realizes pupil expansion of the image light ray L1 in the first propagation direction (the positive direction of the Y axis). In summary, as shown in Fig. 3, the exit extension region 53 reproduces in the first propagation direction (the positive direction of the Y axis), the pupil of the image light ray L1 projected by the projection optical system 6 to expand the pupil by dividing the image light ray L1B into the plurality of image light rays L2 which are substantially parallel to each other and travel toward the field of view region Ac.

As described above, the auxiliary extension region 52 and the exit extension region 53 reproduce the pupil of the image light ray L1 to expand the pupil, by dividing the image light ray L1 entering the body 50 of the light guide 5 via the incident region 51 into the plurality of image light rays L1. In the present embodiment, the auxiliary extension region 52 and the exit extension region 53 reproduce the pupil of the image light ray L1 to expand the pupil, by dividing the image light ray L1 entering the body 50 of the light guide 5 via the incident region 51 into the plurality of image light rays L2 and allowing them to emerge toward the field of view region Ac. It is preferable that the plurality of image light rays L2 reaching the field of view region Ac are parallel to each other. The expression "the plurality of image light rays L2 are parallel to each other" is not limited to meaning that the plurality of image light rays L2 are parallel to each other in a strict sense, but includes meaning that the plurality of image light rays L2 are substantially parallel to each other. When the plurality of image light rays L2 are not parallel to each other in a strict sense, it is sufficient that directions of the plurality of image light rays L2 are aligned to an extent that the plurality of image light rays L2 are considered to be parallel to each other in view of an optical design. When the plurality of image light rays L2 are parallel to each other, it is possible to improve uniformity of arrangement of the pupil of the image light ray in the field of view region Ac and this can reduce an area of the field of view region Ac where no pupil of an image light ray is located. In the present embodiment, as shown in Fig. 2, the plurality of image light rays L2 travel toward the field of view region Ac by being reflected by the windshield 101. The light guide 5 may be configured to allow the plurality of image light rays L2 traveling toward the field of view region Ac by being reflected by the windshield 101 to be parallel to each other. In a case where the windshield 101 has a curved surface as shown in Fig. 2, the image light rays L2 may have different incident angles and different reflection angles depending on positions in a surface of the windshield 101 even when directions thereof toward the windshield 101 are identical to each other. Accordingly, the light guide 5 is configured to allow the plurality of image light ray L2 not to be parallel to each other after emerging from the light guide 5 before being incident on the windshield 101, and to be parallel to each other by being reflected by the windshield 101. In other hand, in a case where the windshield 101 has a flat surface, the image light rays L2 may have the same incident angle and the same reflection angle regardless of positions in a surface of the windshield 101 only when directions thereof toward the windshield 101 are identical to each other. Therefore, the light guide 5 may be configured to enable the plurality of image light ray L2 to be parallel to each other and emerge from the light guide 5.

The projection optical system 6 projects the image light ray L1 which is output from the display element 2 and forms the image. Thus, the projection optical system 6 allows the image light ray L1 from the display element 2 to be incident on the light guide 5. As shown in Fig. 1, the projection optical system 6 is positioned between the display element 2 and the light guide 5. The projection optical system 6 collimates the image light ray L1 from the display element 2 and allows it to be incident on the incident region 51, for example. The projection optical system 6 allows the image light ray L1 to be incident on the incident region 51 as a substantial collimated light ray. The projection optical system 6 may be a biconvex lens, for example.

The control device 4 can be realized by semiconductor elements or the like. The control device 4 may be configured by a microcomputer, a CPU, an MPU, a GPU, a DSP, a FPGA, or an ASIC, for example. The control device 4 realizes a predetermined function by performing various arithmetic processing by reading out data or programs stored in a storage device 4a. The storage device 4a is a storage medium for storing programs or data necessary for realizing the function of the control device 4. The storage device 4a may be realized by a hard disc drive (HDD),m an SSD, an RAM, a DRAM, a ferroelectric memory, a flash memory, a magnetic disk, or a combination thereof, for example. The storage device 4a stores a plurality of files of image data representing the virtual image Iv as an optical image. The control device 4 determines the virtual image Iv to be displayed, based on a vehicle relation information obtained from the outside. The control device 4 reads out the image data of the determined virtual image Iv from the storage device 4a and outputs it to the display element 2.

In the aforementioned image display device 1, the light guide 5 is configured such that at least one part of the exit extension region 53 satisfies a relation where θ_out is equal to or greater than 15° and is equal to or smaller than 45°, and θ_in is greater than θ_out by 14° or more, when a refractive index of a medium on an incident side of an image light ray relative to the exit extension region 53 and a refractive index of a medium on an exit side of an image light ray relative to the exit extension region 53 are assumed to be equal to each other.

As shown in Fig. 3, θ_in is an incident angle of the image light ray L1B incident on the exit extension region 53 in a predetermined plane P1 including a normal line N1 of the exit extension region 53. θ_out is an exit angle of the image light ray L1C emerging from the exit extension region 53 in the predetermined plane P1 including the normal line N1 of the exit extension region 53 at the highest diffraction efficiency.

By doing so, it is possible to reduce production of unnecessary diffraction light (hereinafter, simply referred to as unnecessary light) at the exit extension region 53. Thus, it is possible to improve a usage efficiency of the image light ray L1 from the display element 2.

Especially, in the present embodiment, the light guide 5 is configured to satisfy the following formula (1).

[FORMULA 1]

$$\sin \theta\_in > \frac{\sin \theta\_out + 1}{2} \qquad (1)$$

In the present embodiment, by at least one part of the exit extension region 53 satisfying the formula (1) when a refractive index of a medium on an incident side of an image light ray relative to the exit extension region 53 and a refractive index of a medium on an exit side of an image light ray relative to the exit extension region 53 are assumed to be equal to each other, production of unnecessary diffraction light (hereinafter, simply referred to as unnecessary light) at the exit extension region 53 can be reduced. This enables improvement of a usage efficiency of the image light ray L1 from the display element 2.

In this context, the at least one part of the exit extension region 53 may be any part of the exit extension region 53 but preferably it may be included in an end on a side of the incident region 51, of the exit extension region 53 in an optical path of the image light ray L1 from the incident region 51 to the exit extension region 53. In the present embodiment, the optical path of the image light ray L1 from the incident region 51 to the exit extension region 53 passes through the auxiliary extension region 52. Therefore, "an end on a side of the incident region 51, of the exit extension region 53 in an optical path of the image light ray L1 from the incident region 51 to the exit extension region 53" is not an end in the negative direction of the X axis but an end in the negative direction of the Y axis, of the exit extension region 53 in Fig. 4. In the present embodiment, the end on the side of the incident region 51, of the exit extension region 53 may be a region which occupies a quarter of the exit extension region 53 in the first propagation direction from an end 53a on the side of the incident region 51, of the exit extension region 53. The end on the side of the incident region 51, of the exit extension region 53 in the optical path of the image light ray L1 from the incident region 51 to the exit extension region 53 is an end on an incident side of an image light ray of the exit extension region 53 and therefore a part of the exit extension region 53 which may see a large amount of the image light ray L1B incident on the exit extension region 53. Accordingly, production of unnecessary light is reduced at the part which sees a large amount of the image light ray L1B incident on the exit extension region 53 and thus it is possible to improve a usage efficiency of the image light ray L1 from the display element 2 efficiently. Of course, the light guide 5 may be configured so that a whole of the exit extension region 53 satisfies the formula (1) when a refractive index of a medium on an incident side of an image light ray relative to the exit extension region 53 and a refractive index of a medium on an exit side of an image light ray relative to the exit extension region 53 are assumed to be equal to each other.

The following TABLE 1 shows lower limits of the incident angle θ_in satisfying the formula (1). In TABLE 1, the incident angle θ_in is a value obtained by rounding decimals.

[TABLE 1]

| θ_out | 15° | 20° | 25° | 30° | 35° | 40° | 45° |
|---|---|---|---|---|---|---|---|
| θ_in | 39° | 42° | 45° | 49° | 52° | 55° | 59° |
| θ_in-θ_out | 24° | 22° | 20° | 19° | 17° | 15° | 14° |

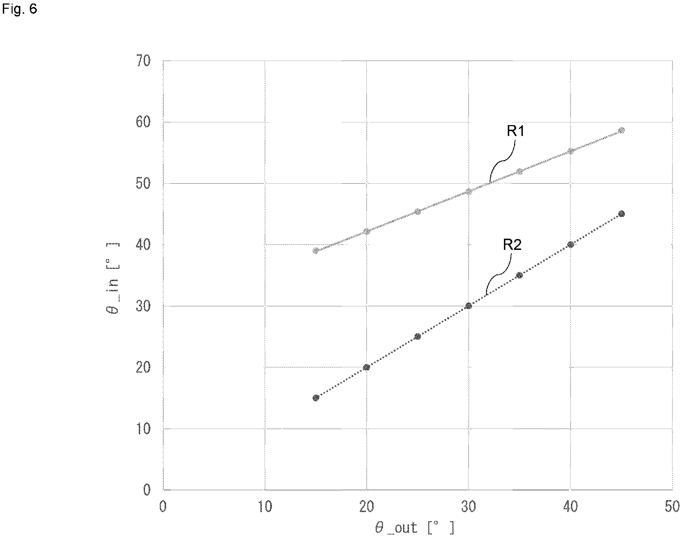

Fig. 6 is a graph representing a relation between the incident angle θ_in and the exit angle θ_out. R1 represents a relation of TABLE 1, and R2 a relation of θ_in = θ_out for mere reference.

At least when θ_out is equal to or greater than 15° and is equal to or smaller than 45°, R1 can be approximated by a straight line. From this point, in the present embodiment, the light guide 5 is configured to satisfy the following formula (2).

In the following formula (2), the incident angle $\theta\_in$ is a value obtained by rounding decimals.
[FORMULA 2]

$$\theta\_in > 0.65 \times \theta\_out + 29° \qquad (2)$$

In the present embodiment, by at least one part of the exit extension region 53 satisfying the formula (2) when a refractive index of a medium on an incident side of an image light ray relative to the exit extension region 53 and a refractive index of a medium on an exit side of an image light ray relative to the exit extension region 53 are assumed to be equal to each other, production of unnecessary light at the exit extension region 53 can be reduced. This enables improvement of a usage efficiency of the image light ray L1 from the display element 2.

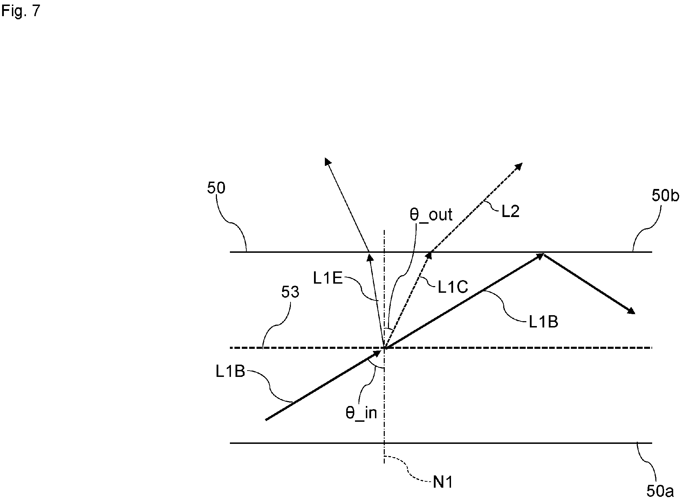

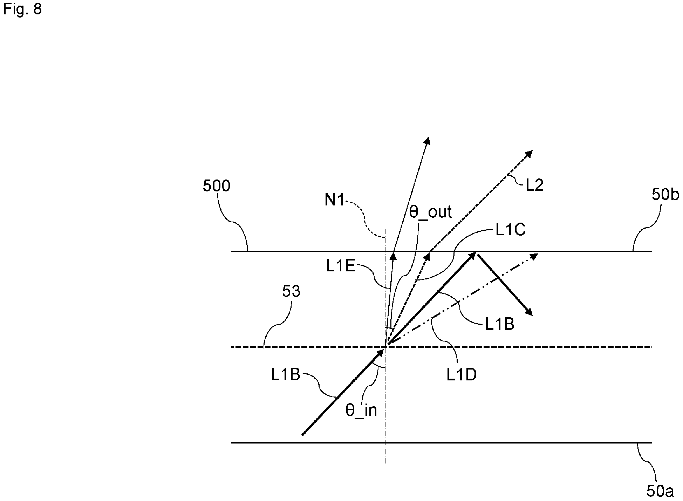

Next, the above formula (1) will be explained with reference to Fig. 7 and Fig. 8. Fig. 7 is an explanatory view of diffraction effect of the image light ray L1B by the exit extension region 53 of the light guide 5. Fig. 8 is an explanatory view of diffraction effect of an image light ray by an exit extension region 53 of a light guide 500 of a comparative example. Diffraction caused by the exit extension region 53 can be expressed by the following formula (3).
[FORMULA 3]

$$n\_out \times \sin \theta_m - n\_in \times \sin \theta\_in = \frac{m \times \lambda}{d} \qquad (3)$$

In the formula (3), m is a diffraction order. d is a diffraction pitch (diffraction period). $\lambda$ is a wavelength of the image light ray L1B. $\theta_m$ is an exit angle of an image light ray diffracted into m-th order (m-order diffraction light) emerging from the exit extension region 53 in the predetermined plane P1 including the normal line N1 of the exit extension region 53.

In the formula (3), n_in is a refractive index of a medium on an incident side of an image light ray relative to the exit extension region 53. n_out is a refractive index of a medium on an exist side of an image light ray relative to the exit extension region 53. In the present embodiment, the medium on the incident side of the image light ray relative to the exit extension region 53 and the medium on the exist side of the image light ray relative to the exit extension region 53 are each the body 50 of the light guide 5. The refractive index n_in is equal to the refractive index n_out. Therefore, when a refractive index of the body 50 of the light guide 5 is denoted by $n_0$, the following formula (4) can be obtained from the above formula (3).
[FORMULA 4]

$$\sin \theta_m - \sin \theta\_in = \frac{m \times \lambda}{n_0 \times d} \qquad (4)$$

In Fig. 8, the exit extension region 53 provides the image light rays L1C, L1D, L1E traveling in different directions, from the image light ray L1B. Herein, the image light ray L1C is a first positive order diffraction light, the image light ray L1D is a first negative order diffraction light, and the image light ray L1E is a second positive order diffraction light. The image light ray L1B on an exit side relative to the exit extension region 53 is a zero order diffraction light.

The image light ray L1C is an image light ray emerging from the exit extension region 53 at the highest diffraction efficiency. The image light ray L1C is the first positive order diffraction light and thus m = 1 and accordingly the following formula (5) is established.
[FORMULA 5]

$$\sin \theta_1 - \sin \theta\_in = \frac{\lambda}{n_0 \times d} \qquad (5)$$

The image light ray L1D is unnecessary light. The image light ray L1D is the first negative order diffraction light and thus m = -1 and accordingly the following formula (6) is established.
[FORMULA 6]

$$\sin \theta_{-1} - \sin \theta\_in = \frac{-\lambda}{n_0 \times d} \qquad (6)$$

As shown in Fig. 7, when the image light ray L1D is made to be absent, light amount of the image light ray L1C increases. Thus, it is expected to improve a usage efficiency of the image light ray L1 from the display element 2. A condition where the image light ray L1D is absent, is that the image light ray L1D is absent on the exit side relative to the exit extension region 53. This is equivalent to a situation where $\theta_{-1}$ is absent. As above, the condition where the image light ray L1D is absent is given by the following formula (7).

[FORMURA 7]

$$\sin \theta_{-1} > 1 \qquad (7)$$

From the formula (6) and the formula (7), the following formula (8) can be obtained.

[FORMULA 8]

$$\sin \theta_1 - \frac{\lambda}{n_0 \times d} > 1 \qquad (8)$$

From the formula (5) and the formula (8), the following formula (9) can be obtained.

[FORMULA 9]

$$\sin \theta\_in - (\sin \theta_1 - \sin \theta\_in) > 1 \qquad (9)$$

Since the image light ray L1C is an image light ray emerging from the exit extension region 53 at the highest diffraction efficiency, the above formula (1) can be obtained by replacing $\theta_1$ of the formula (9) with $\theta\_out$ and modifying the formula (9).

"When a refractive index of a medium on an incident side of an image light ray relative to the exit extension region and a refractive index of a medium on an exit side of an image light ray relative to the exit extension region are assumed to be equal to each other" means that the exit angle $\sin \theta\_out$ is adjusted in advance under a condition where a refractive index of a medium on an incident side of an image light ray relative to the exit extension region and a refractive index of a medium on an exit side of an image light ray relative to the exit extension region are equal to each other, for example. For example, the exit angle $\sin \theta\_out$ when a refractive index of a medium on an incident side of an image light ray relative to the exit extension region and a refractive index of a medium on an exit side of an image light ray relative to the exit extension region are different from each other is denoted by $\sin \theta\_out1$. The exit angle $\sin \theta\_out$ when a refractive index of a medium on an incident side of an image light ray relative to the exit extension region and a refractive index of a medium on an exit side of an image light ray relative to the exit extension region are equal to each other is denoted by $\sin \theta\_out2$. When the aforementioned refractive indices n_in, n_out, $\sin \theta\_out2 = (n\_out/n\_in) \times \sin \theta\_out1$. In summary, in the formula (1), $\sin \theta\_out2$ is used as $\sin \theta\_out$.

The light guide 500 of the comparative example of Fig. 8 has a similar configuration to the light guide 5 of Fig. 3 but is different from the light guide 5 in that any part of the exit extension region 530 does not satisfy the above formula (1). Therefore, according to the light guide 500 of the comparative example, the image light ray L1D is present. The presence of the image light ray L1D causes a decrease in light amount of the image light ray L1C. This may be a factor causing a decrease in a usage efficiency of the image light ray L1 from the display element 2.

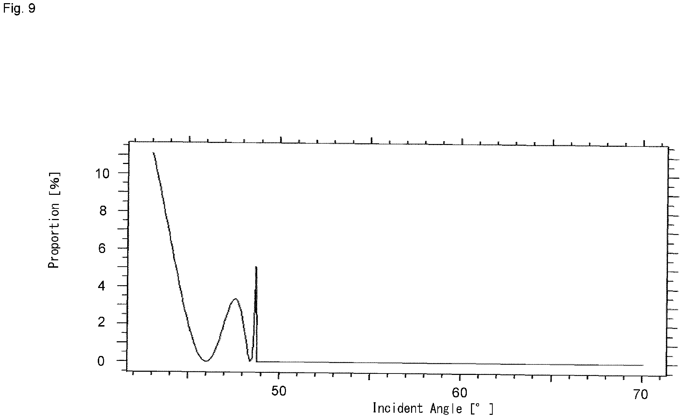

Fig. 9 is a graph representing one example of a relation between the incident angle ($\theta\_in$) of the image light ray L1B to the exit extension region 53 and a proportion of a -1st order (first negative order) diffraction light (the image light ray L1D). As one example, when the incident angle is 43°, a proportion of a 1st order (first positive order) diffraction light is 18%, a proportion of a -1st order diffraction light is 10%, and a proportion of a 2nd order (second positive order) diffraction light is 0.6%. As one example, when the incident angle is 51°, a proportion of a 1st order (first positive order) diffraction light is 22%, a proportion of a -1st order diffraction light is 0%, and a proportion of a 2nd order (second positive order) diffraction light is 0.2%. Therefore, by making a -1st order diffraction light (the image light ray L1D) to be absent, a proportion, that is, light amount, of a 1st order diffraction light (the image light ray L1C) can be increased. Consequently, it can be expected to improve a usage efficiency of the image light ray L1 of the display element 2.

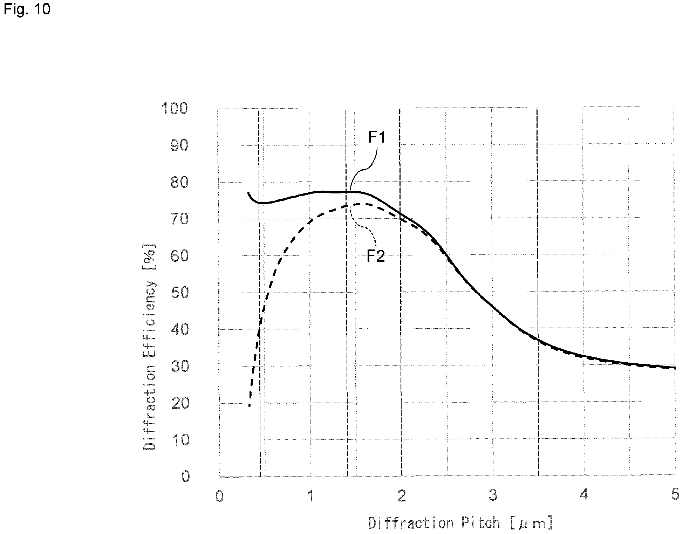

The diffraction efficiency by the diffraction structure of the exit extension region 53 may vary depending on the diffraction pitch (the diffraction period Gp3) and a polarization state of an image light ray. Fig. 10 is a graph representing one example of a relation between the diffraction pitch and the diffraction efficiency. A graph F1 in Fig. 10 indicates a variation or change depending on the diffraction pitch, in a maximum value of the diffraction efficiency obtained when the polarization state of the image light ray is changed. A graph F2 in Fig. 10 indicates a variation or change depending on the diffraction pitch, in a minimum value of the diffraction efficiency obtained when the polarization state of the image light ray is changed. In Fig. 10, the incident angle of the image light ray relative to the exit extension region 53 is 45°, and the wavelength of the image light ray is 0.52 $\mu$m. In Fig. 10, the diffraction structure of the exit extension region 53 is a volume holographic element and in this volume holographic element the thickness is 5 $\mu$m, the refractive index is 1.505, the refractive index modulated amount is 0.03.

From Fig. 10, when the diffraction pitch is in a range of 1.4 $\mu$m to 2.0 $\mu$m, the maximum value and the minimum value of the diffraction efficiency both increase. When the diffraction pitch falls below about 0.45 $\mu$m, a difference between the maximum value and the minimum value of the diffraction efficiency rapidly increases. An increase in the difference between the maximum value and the minimum value of the diffraction efficiency may result in an increase in a change in the diffraction efficiency during propagation of the image light ray in the exit extension region 53. This may cause a decrease in image quality of the virtual image Iv. This is because any image light ray suffers from a change in its polarization state due to the diffraction structure in pupil expansion. When the diffraction pitch is excessively large, the maximum value and the minimum value of the diffraction efficiency both become smaller. In Fig. 10, when the diffraction pitch is about 3.5 $\mu$m, the maximum value and the minimum value of the diffraction efficiency become about halves of their own peaks (the maximum value and the minimum value of the diffraction efficiency in a range of the diffraction pitch from 1.4 $\mu$m to 2.0 $\mu$m).

From a result of simulation of variation depending on the diffraction pitch, of the maximum value and the minimum value, of the diffraction efficiency obtained when the polarization state of the image light ray was changed as shown in Fig. 10 for variations of the diffraction structure of the exit extension region 53, it was confirmed that when the diffraction period of the exit extension region 53 is equal to or greater than $1.23 \times \lambda/n$ and is equal to or smaller than $10.0 \times \lambda/n$, it was possible to increase the maximum value and the minimum value of the diffraction efficiency while decreasing the difference between the maximum value and the minimum value of the diffraction efficiency. Thus, it is possible to improve a usage efficiency of the image light ray L1 from the display element 2 and to reduce a decrease in image quality of the virtual image Iv due to the polarization state of the image light ray L1. Herein, $\lambda$ is the wavelength of the image light ray and n is the refractive index of the exit extension region 53. When the diffraction structure of the exit extension region 53 is a volume holographic element, the refractive index of the exit extension region 53 is a refractive index of the volume holographic element.

## [1.2 WORKING EXAMPLES AND COMPARATIVE EXAMPLES]

Hereinafter, working examples and comparative examples of the light guide 5 will be described. The following working examples are just some of possible working examples of the light guide 5.

The following TABLES 2 to 4 each indicate parameters of an image light ray and parameters of a diffraction structure regarding the incident region 51, the auxiliary extension region 52 and the exit extension region 53 of working examples 1 to 4 and comparative examples 1 to 3.

The parameters of an image light ray regarding the incident region 51, the auxiliary extension region 52 and the exit extension region 53 include $\theta$_inx [°], $\theta$_iny [°], $\theta$_outx [°], and $\theta$_outy [°].

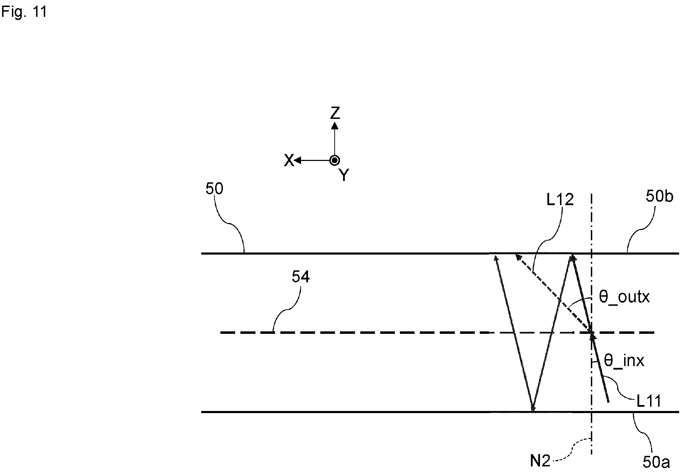

$\theta$_inx is an incident angle of an image light ray in an XZ plane of the light guide 5 of Fig. 3. $\theta$_outx is an exit angle of an image light ray in the XZ plane of the light guide 5. Detailed explanation will be made with reference to Fig. 11. Fig. 11 is an explanatory view of the incident angle $\theta$_inx and the exit angle $\theta$_outx of an image light ray in the XZ plane of the light guide 5 of Fig. 3. In Fig. 11, a diffraction structure 54 indicates a diffraction structure of any of the incident region 51, the auxiliary extension region 52 or the exit extension region 53. An image light ray L11 indicates an image light ray incident on any of the incident region 51, the auxiliary extension region 52 or the exit extension region 53. An image light ray L12 indicates an image light ray emerging from any of the incident region 51, the auxiliary extension region 52 or the exit extension region 53 at the highest diffraction efficiency. In Fig. 11, $\theta$_inx is an incident angle of the image light ray L11 incident on the diffraction structure 54 in a predetermined plane (XZ plane) including a normal line N2 of the diffraction structure 54. In Fig. 11, $\theta$_outx is an exit angle of the image light ray L12 emerging from the diffraction structure 54 at the highest diffraction efficiency in the predetermined plane (XZ plane) including the normal line N2 of the diffraction structure 54.

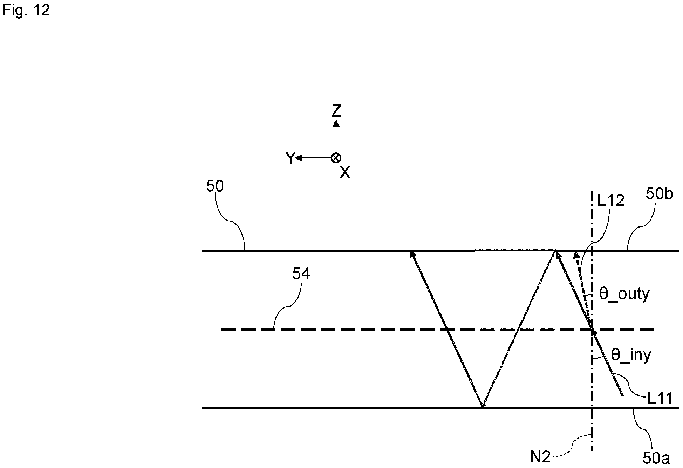

$\theta$_iny is an incident angle of an image light ray in an YZ plane of the light guide 5 of Fig. 3. $\theta$_outy is an exit angle of an image light ray in the YZ plane of the light guide 5. Detailed explanation will be made with reference to Fig. 12. Fig. 12 is an explanatory view of the incident angle $\theta$_iny and the exit angle $\theta$_outy of an image light ray in the YZ plane of the light guide 5 of Fig. 3. In Fig. 12, the diffraction structure 54 indicates a diffraction structure of any of the incident region 51, the auxiliary extension region 52 or the exit extension region 53. The image light ray L11 indicates an image light ray incident on any of the incident region 51, the auxiliary extension region 52 or the exit extension region 53. The image light ray L12 indicates an image light ray emerging from any of the incident region 51, the auxiliary extension region 52 or the exit extension region 53 at the highest diffraction efficiency. In Fig. 12, $\theta$_iny is an incident angle of the image light ray L11 incident on the diffraction structure 54 in a predetermined plane (YZ plane) including the normal line N2 of the diffraction structure 54. In Fig. 12, $\theta$_outy is an exit angle of the image light ray L12 emerging from the diffraction structure 54 at the highest diffraction efficiency in the predetermined plane (YZ plane) including the normal line N2 of the diffraction structure 54.

The parameters of the diffraction structure regarding the incident region 51 include Ga1 [°] and Gp1 [$\mu$m] shown

in Fig. 4. The parameters of the diffraction structure regarding the auxiliary extension region 52 include Ga2 [°] and Gp2 [μm] shown in Fig. 4. The parameters of the diffraction structure regarding the exit extension region 53 include Ga3 [°] and Gp3 [μm] shown in Fig. 4.

[TABLE 2]

| Incident Region | θ_inx | θ_iny | θ_outx | θ_outy | Ga1 | Gp1 |
|---|---|---|---|---|---|---|
| Working Example 1 | 0.00 | 31.00 | 46.59 | 0.00 | 34.75 | 0.391 |
| Working Example 2 | 0.00 | 31.00 | 46.59 | 0.00 | 34.75 | 0.466 |
| Working Example 3 | 5.00 | 35.00 | 47.00 | 2.00 | 39.73 | 0.403 |
| Working Example 4 | 0.00 | 0.00 | 50.00 | 0.00 | 0.00 | 0.451 |
| Comparative Example 1 | 0.00 | 31.00 | 46.59 | 0.00 | 34.75 | 0.391 |
| Comparative Example 2 | 0.00 | 31.00 | 46.59 | 0.00 | 34.75 | 0.466 |
| Comparative Example 3 | 5.00 | 35.00 | 47.00 | 2.00 | 39.73 | 0.403 |

[TABLE 3]

| Auxiliary Extension Region | θ_inx | θ_iny | θ_outx | θ_outy | Ga2 | Gp2 |
|---|---|---|---|---|---|---|
| Working Example 1 | 46.59 | 0.00 | 0.00 | 51.00 | 46.93 | 0.325 |
| Working Example 2 | 46.59 | 0.00 | 0.00 | 51.00 | 46.93 | 0.387 |
| Working Example 3 | 47.00 | 2.00 | 10.12 | 55.00 | 51.50 | 0.342 |
| Working Example 4 | 50.00 | 0.00 | 0.00 | 50.00 | 45.00 | 0.319 |
| Comparative Example 1 | 46.59 | 0.00 | 0.00 | 43.00 | 43.19 | 0.347 |
| Comparative Example 2 | 46.59 | 0.00 | 0.00 | 43.00 | 43.19 | 0.413 |
| Comparative Example 3 | 47.00 | 2.00 | 6.646 | 43.00 | 45.42 | 0.375 |

[TABLE 4]

| Exit Extension Region | θ_inx | θ_iny | θ_outx | θ_outy | Ga3 | Gp3 |
|---|---|---|---|---|---|---|
| Working Example 1 | 0.00 | 51.00 | 0.00 | 31.00 | 90.00 | 1.318 |
| Working Example 2 | 0.00 | 51.00 | 0.00 | 31.00 | 90.00 | 1.572 |
| Working Example 3 | 10.12 | 55.00 | 5.00 | 35.00 | 97.12 | 1.412 |
| Working Example 4 | 0.00 | 50.00 | 0.00 | 0.00 | 90.00 | 0.451 |
| Comparative Example 1 | 0.00 | 43.00 | 0.00 | 31.00 | 90.00 | 2.069 |
| Comparative Example 2 | 0.00 | 43.00 | 0.00 | 31.00 | 90.00 | 2.467 |
| Comparative Example 3 | 6.65 | 43.00 | 5.00 | 35.00 | 97.12 | 3.191 |

The following TABLE 5 shows a left side and a right side of the formula (1) as well as presence or absence of unnecessary light, of working examples 1 to 4 and comparative examples 1 to 3. The left side and the right side of the formula (1) in TABLE 5 were calculated by substituting θ_iny of TABLE 4 for θ_in of the formula (1) and substituting θ_outy of TABLE 4 for θ_out in the formula (1). Note that in working examples 1 to 4 and comparative examples 1 to 3, the refractive index n of the body 50 of the light guide 5 is 1.505. In working examples 1, 3 and 4 and comparative examples 1 and 3, the wavelength of the image light ray L1 is 0.52 [μm]. In working example 2 and comparative example 2, the wavelength of the image light ray L1 is 0.62 [μm].

[TABLE 5]

| | Left Side | Right Side | Presence or Absence of Unnecessary light |
|---|---|---|---|
| Working Example 1 | 0.777 | 0.758 | Absence |

(continued)

|  | Left Side | Right Side | Presence or Absence of Unnecessary light |
|---|---|---|---|
| Working Example 2 | 0.777 | 0.758 | Absence |
| Working Example 3 | 0.821 | 0.788 | Absence |
| Working Example 4 | 0.766 | 0.500 | Absence |
| Comparative Example 1 | 0.682 | 0.758 | Presence |
| Comparative Example 2 | 0.682 | 0.758 | Presence |
| Comparative Example 3 | 0.685 | 0.788 | Presence |

By comparison between working example 1 and comparative example 1, in the YZ plane, presence of unnecessary light was confirmed in comparative example 1 but presence of unnecessary light was not confirmed in working example 1. By comparison between working example 2 and comparative example 2, in the YZ plane, presence of unnecessary light was confirmed in comparative example 2 but presence of unnecessary light was not confirmed in working example 2. By comparison between working example 3 and comparative example 3, in a plane inclined relative to the Y axis by 7.12° in the XY plane, presence of unnecessary light was confirmed in comparative example 3 but presence of unnecessary light was not confirmed in working example 3. In working example 4, presence of unnecessary light was not confirmed.

From TABLE 5, working examples 1 to 4 satisfy the formula (1) but comparative examples 1 to 3 do not satisfy the formula (1). Therefore, by at least one part of the exit extension region 53 satisfying the formula (1), production of the unnecessary light at the exit extension region 53 can be reduced. Thus, it is possible to improve a usage efficiency of the image light ray L1 from the display element 2. In particular, in working examples 1 to 3, the exit angle $\theta\_outy$ of the image light ray in the YZ plane of the light guide 5 is equal to or greater than 15° and is equal to or smaller than 45° and the incident angle $\theta\_iny$ of the image light ray in the YZ plane of the light guide 5 is greater than the exit angle $\theta\_outy$ by 14° or more. Additionally, working examples 1 to 3 satisfy the formula (2). Working examples 1 to 3 are suitable for head-up displays since the first inclined angle and the second inclined angle of the image light ray L1 are not 0°. Working example 4 is suitable for head-mounted displays since the first inclined angle and the second inclined angle of the image light ray L1 are 0°.

[1.3 ADVANTAGEOUS EFFECTS]

The aforementioned optical system 3 includes the light guide 5 for guiding the image light ray L1 which is output from the display element 2 and forms an image, to the field of view region Ac of the user D as an optical image (the virtual image Iv). The light guide 5 includes: the body 50 having a plate shape; an incident region 51 formed at the body 50 and allowing the image light ray L1 to enter the body 50 so that the image light ray L1 propagates inside the body 50; and an exit extension region 52 formed at the body 50 and including the diffraction structure dividing an image light ray L1B propagating in the first propagation direction intersecting the thickness direction of the body 50, into a plurality of image light rays L1C propagating in the second propagation direction intersecting the first propagation direction, in the first propagation direction, and allowing them to emerge from the light guide 5. At least one part of the exit extension region 53 satisfies that when the refractive index of the medium on an incident side of an image light ray L1B relative to the exit extension region 53 and the refractive index of the medium on an exit side of an image light ray L1B relative to the exit extension region 53 are assumed to be equal to each other, an exit angle $\theta\_out$ of an image light ray L1C emerging from the exit extension region 53 at the highest diffraction efficiency in the predetermined plane P1 including the normal line N of the exit extension region 53 is equal to or greater than 15° and is equal to or smaller than 45°, and an incident angle $\theta\_in$ of an image light ray L1B incident on the exit extension region 53 in the predetermined plane P1 is greater than the exit angle $\theta\_out$ by 14° or more. This configuration can improve a usage efficiency of the image light ray L1 from the display element 2.

In the optical system 3, the following formula (1) is satisfied.

[FORMULA 10]

$$\sin\theta\_in > \frac{\sin\theta\_out + 1}{2} \qquad (1)$$

This configuration can improve a usage efficiency of the image light ray L1 from the display element 2.

In the optical system 3, the following formula (2) is satisfied.

[FORMULA 11]

$$\theta\_in > 0.65 \times \theta\_out + 29° \qquad (2)$$

This configuration can improve a usage efficiency of the image light ray L1 from the display element 2.

In the optical system 3, the body 50 includes the first surface 50a and the second surface 50b in the thickness direction. The incident region 51 allows the image light ray L1 incident on the first surface 50a in the first inclined direction inclined relative to the normal line of the first surface 50a, to enter the body 50 so that the image light ray L1 propagates inside the body 50. The exit extension region 53 allows the plurality of image light rays L1C propagating in the second propagation direction to emerge from the second surface 50b in the second inclined direction inclined relative to the normal line of the second surface 50b. This configuration can improve a usage efficiency of the image light ray L1 from the display element 2.

In the optical system 3, the first inclined direction and the second inclined direction are parallel to each other. This configuration can improve a usage efficiency of the image light ray L1 from the display element 2.

In the optical system 3, the diffraction structure of the exit extension region 53 is a volume holographic element positioned inside the body 50 This configuration can easily increase a size of the exit expansion region 53.

In the optical system 3, the light guide 5 further includes the auxiliary extension region 52 which is formed at the body 50 and includes the diffraction structure dividing an image light ray L1A propagating in the predetermined direction inside the body 50 by the incident region 51, into a plurality of image light rays L1B propagating in the first propagation direction, in the predetermined direction, and allowing them to travel toward the exit extension region 53. This configuration allows expansion of a pupil in a plurality of different directions.

In the optical system 3, the diffraction pitch of the exit extension region 53 is equal to or greater than $1.23 \times \lambda/n$ and equal to or smaller than $10.0 \times \lambda/n$. $\lambda$ is the wavelength of the image light ray L1, L1A, L1B, L1C, L2. n is the refractive index of the exit extension region 53. This configuration can improve a usage efficiency of the image light ray L1 from the display element 2 and can reduce a decrease in an image quality of the optical image (the virtual image Iv) due to a polarization state of the image light ray L1.

In the optical system 3, the at least one part of the exit extension region 53 is included in an end on the side of the incident region 51, of the exit extension region 53 in an optical path of the image light ray L1 from the incident region 51 to the exit extension region 53. This configuration can improve a usage efficiency of the image light ray L1 from the display element 2.

In the optical system 3, the light guide 5 is positioned to guide the image light ray L2 emerging from the body 50 to the field of view region Ac as the optical image (the virtual image Iv) by reflecting the image light ray L2 by a light-transmissive member (the windshield 101). This configuration allows application to head-up displays.

In the optical system 3, the optical system 3 further includes the projection optical system 6 allowing the image light ray L1 to be incident on the incident region 51 of the light guide 5 as a substantial collimate light ray. This configuration can further improve a usage efficiency of the image light ray L1 from the display element 2.

The aforementioned image display device 1 includes the optical system 3 and the display element 2. This configuration can improve a usage efficiency of the image light ray L1 from the display element 2.

[2. VARIATIONS]

Embodiments of the present disclosure are not limited to the above embodiment. The above embodiment may be modified in various ways in accordance with designs or the like to an extent that they can achieve the problem of the present disclosure. Hereinafter, some variations or modifications of the above embodiment will be listed. One or more of the variations or modifications described below may apply in combination with one or more of the others.

In one variation, the diffraction structure of the exit extension region 53 is not limited to a volume holographic element (holographic diffraction grating) but may be a surface-relief diffraction grating. When the surface-relief diffraction grating is of a reflection type, a medium on an incident side of an image light ray relative to the exit extension region 53 and a medium on an exit side of an image light ray relative to the exit extension region 53 each are the body 50 of the light guide 5. When the surface-relief diffraction grating is of a transmission type, a medium on an incident side of an image light ray relative to the exit extension region 53 is the body 50 of the light guide 5 but a medium on an exit side of an image light ray relative to the exit extension region 53 is air, for example. Regardless of whether or not the surface-relief diffraction grating is of a reflection type or a transmission type, it is sufficient that at least one part of the exit extension region 53 satisfies the formula (1) when a refractive index of a medium on an incident side of an image light ray relative to the exit extension region 53 and a refractive index of a medium on an exit side of an image light ray relative to the exit extension region 53 are assumed to be equal to each other.

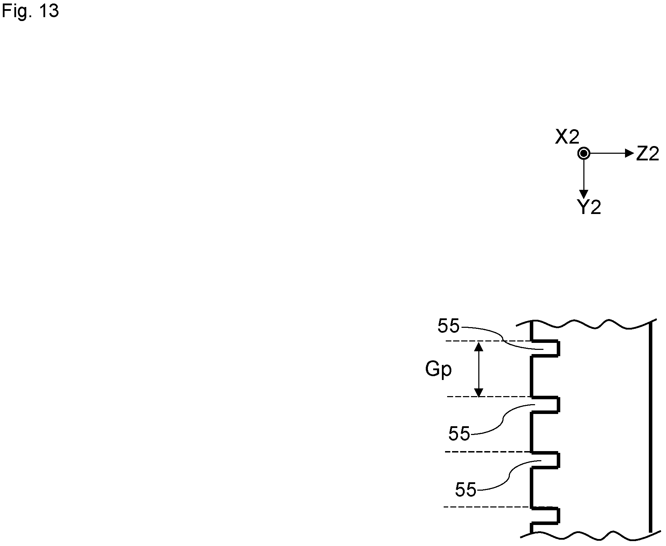

Fig. 13 is a schematic explanatory view of a surface-relief diffraction grating. Especially, the surface-relief diffraction grating of Fig. 13 is of a reflection type. The surface-relief diffraction grating produces diffraction effect by recessed or protruded parts 55 arranged periodically. The recessed or protruded parts 55 of Fig. 13 are grooves. In Fig. 13, a direction of a Z2 axis is a thickness direction of the surface-relief diffraction grating. A direction of an X2 axis and a direction of a Y2 axis are perpendicular to the direction of the Z2 and also are perpendicular to each other. The direction of the X2 axis is a direction in which the recessed or protruded parts 55 extend. The direction of the Y2 axis is a direction in which the recessed or protruded parts 55 are arranged. Gp of Fig. 13 indicates a diffraction period (diffraction pitch) [μm] of the surface-relief diffraction grating. The diffraction period Gp3 of the exit extension region 53 of Fig. 4 may correspond to the diffraction period Gp of Fig. 13. The angle Ga3 of the exit extension region 53 of Fig. 4 may correspond to an angle of the direction of the X2 axis of the surface-relief diffraction grating of Fig. 13 relative to the direction of the Y axis in a plane perpendicular to the thickness direction of the body 50 (in the XY plane). The surface-relief diffraction grating may be made of material not limited to the same material as the light guide 5 but different from the material of the light guide 5. For example, the material of the light guide 5 may be glass and the material of the surface-relief diffraction grating may be ultraviolet curable resin. In this case, the surface-relief diffraction grating can be fabricated by nanoimprint techniques. Note that, the refractive index of the exit extension region 53 is a refractive index of the material forming the surface-relief diffraction grating when the diffraction structure of the exit extension region 53 is the surface-relief diffraction grating.

In one variation, the diffraction structures of the incident region 51 and the auxiliary extension region 52 are not limited to a volume holographic element (holographic diffraction grating), but may be a surface-relief diffraction grating. In one variation, the incident region 51 and the auxiliary extension region 52 may include half mirrors. The light guide 5 may not include the auxiliary extension region 52. This means that the light guide 5 may be configured to perform pupil expansion in not two axes but a single axis. In this case, the incident region 51 changes a traveling direction of the image light ray L1 incident on the incident region 51 to allow the image light ray L1 to travel in the first propagation direction inside the body 50 as the image light ray L1B. The exit extension region 53 may divide the image light ray L1B from the incident region 51 into a plurality of image light rays L1C propagating in the second propagation direction, in the first propagation direction and allow them to emerge from the light guide 5.

In one variation, the diffraction pitch of the exit extension region 53 is equal to or greater than $1.36 \times \lambda/n$ and equal to or smaller than $3.82 \times \lambda/n$. $\lambda$ is the wavelength of the image light ray L1. n is the refractive index of the body (50). This can improve a usage efficiency of the image light ray L1 from the display element 2. In particular, in application to head-up displays, a usage efficiency of the image light ray L1 from the display element 2 can be improved.

In one variation, the range of the incident angle $\theta\_in$ which is greater than the exit angle $\theta\_out$ by 14° or more or satisfies the formula (1) contains the range determined by incident angles of auxiliary light beams defining both outermost edges of the image light ray L1B incident on the exit extension region 53 regarding the predetermined plane P1. Actually, the image light ray L1B may become wider to an extent and thus there may be a difference between incident angles to the exit extension region 53 of a main light beam and an auxiliary light beam of the image light ray L1B. Therefore, to further improve a usage efficiency of the image light ray L1 from the display element 2, it is preferable that the incident angle is greater than the exit angle $\theta\_out$ by 14° or more or satisfies the formula (1) for all of light beams included in the image light ray L1B. In summary, the range of the incident angle $\theta\_in$ which is greater than the exit angle $\theta\_out$ by 14° or more or satisfies the formula (1) may be set to contain the range determined by incident angles of auxiliary light beams defining both outermost edges of the image light ray L1B incident on the exit extension region 53 regarding the predetermined plane P1. This can reduce production of unnecessary light for all of the light beams contained in the image light ray L1B. By doing so, it is possible to further improve a usage efficiency of the image light ray L1 from the display element 2 for the entire field of view region Ac.

In one variation, the light guide 5 always need not be positioned to guide the image light ray L2 emerging from the body 50 to the field of view region Ac as an optical image (the virtual image Iv) by reflecting the image light ray L2 by the light-transmissive member (the windshield 101). For example, the light guide 5 may be positioned so that the light guide 5 and the field of view region Ac are arranged in a straight line. This means that an optical pathway from the light guide 5 to the field of view region Ac may be a straight line.

In one variation, the projection optical system 6 may be constituted by a plurality of optical elements including a first optical element and a second optical element, rather than a single optical element. The first optical element is a compound lens where a negative meniscus lens and biconvex lens are combined, for example. The second optical element is a compound lens where a positive meniscus lens and a negative meniscus lens are combined, for example. Note that, the optical system 3 may not include the projection optical system 6.

In one variation, it is not always necessary that the projection optical system 6 and the incident region 51 are arranged in a straight line. In other words, the optical path of the image light ray L1 from the projection optical system 6 toward the incident region 51 always need not be straight. For example, the image light ray L1 from the projection optical system 6 may be reflected by a reflection plate to be incident on the incident region 51. In this arrangement, the optical path of the image light ray L1 from the projection optical system 6 toward the incident region 51 is not straight but an L-shape, for example.

In one variation, the image display device 1 may include a plurality of light guides 5 respectively corresponding to wavelengths of light included in the image light ray L1. This enables provision of a color image to a user.

In one variation, the image display device 1 may be applied to, not limited to a head-up display used in an automobile, but a movable object other than automobiles, such as, bicycles, trains, air crafts, construction machinery, and ships. Alternatively, the image display device 1 may be used in, not limited to a movable object, but amusement facilities, for example, and alternatively, in wearable terminals such as head mounted displays (HMD), medical equipment, or, stationary devices.

Additionally, in the above embodiment, the explanation is made to the display element 2 and the optical system 3 which allow a user to visually perceive the virtual image Iv as one example of an optical image. In the present embodiment, an optical image which the display element 2 allows a user to visually perceive is not limited to the virtual image Iv, but a real image, for example. In one instance, the display element 2 may be configured to use the optical system 3 of a pupil expansion type similar to the above, to form a real image between the light-transmissive member such as the windshield 101, and the user D. Such display of real images are useful in amusement application, for example. In a case where such a real image is visually perceived as an optical image, polarization inside the light guide 5 may be considered to affect brightness unevenness similar to the case of the aforementioned virtual image Iv. The display element 2 and the optical system 3 according to the present disclosure can reduce brightness unevenness by controlling the polarization state similar to the above embodiment, thereby suppressing a variation of image quality of a real image.

[3. ASPECTS]

As apparent from the above embodiment and variations, the present disclosure includes the following aspects. Hereinafter, reference signs in parenthesis are attached for the purpose of clearly showing correspondence with the embodiments only.

A first aspect is an optical system (3) and includes a light guide (5) for guiding an image light ray (L1) which is output from a display element (2) and forms an image, to a field of view region (Ac) of a user (D) as an optical image (the virtual image Iv). The light guide (5) includes: a body (50) having a plate shape; an incident region (51) formed at the body (50) and allowing the image light ray (L1) to enter the body (50) so that the image light ray (L1) propagates inside the body (50); and an exit extension region (53) formed at the body (50) and including a diffraction structure dividing an image light ray (L1B) propagating in a first propagation direction intersecting a thickness direction of the body (50), into a plurality of image light rays (L1C) propagating in a second propagation direction intersecting the first propagation direction, in the first propagation direction, and allowing them to emerge from the light guide (5). At least one part of the exit extension region (53) satisfies that when a refractive index of a medium on an incident side of an image light ray (L1B) relative to the exit extension region (53) and a refractive index of a medium on an exit side of an image light ray (L1B) relative to the exit extension region (53) are assumed to be equal to each other, an exit angle $\theta\_out$ of an image light ray (L1C) emerging from the exit extension region (53) at a highest diffraction efficiency in a predetermined plane (P1) including a normal line (N) of the exit extension region (53) is equal to or greater than 15° and is equal to or smaller than 45°, and an incident angle $\theta\_in$ of an image light ray (L1B) incident on the exit extension region (53) in the predetermined plane (P1) is greater than the exit angle $\theta\_out$ by 14° or more. This aspect can improve a usage efficiency of the image light ray (L1) from the display element (2).

A second aspect is an optical system (3) based on the first aspect. **In** this aspect, the following formula (1) is satisfied.

[FORMULA 12]

$$\sin \theta\_in > \frac{\sin \theta\_out + 1}{2} \qquad (1)$$

This aspect can improve a usage efficiency of the image light ray (L1) from the display element (2).

A third aspect is an optical system (3) based on the first or second aspect. In this aspect, the following formula (2) is satisfied.

[FORMULA 13]

$$\theta\_in > 0.65 \times \theta\_out + 29° \qquad (2)$$

This aspect can improve a usage efficiency of the image light ray (L1) from the display element (2).

A fourth aspect is an optical system (3) based on any one of the first to third aspects. In this aspect, the body (50) includes a first surface (50a) and a second surface (50b) in the thickness direction. The incident region (51) allows the image light ray (L1) incident on the first surface (50a) in a first inclined direction inclined relative to a normal line of the first surface (50a), to enter the body (50) so that the image light ray (L1) propagates inside the body (50). The exit extension region (53) allows the plurality of image light rays (L1C) propagating in the second propagation direction to emerge from the second surface (50b) in a second inclined direction inclined relative to a normal line of the second surface (50b). This aspect can improve a usage efficiency of the image light ray (L1) from the display element (2).

A fifth aspect is an optical system (3) based on the fourth aspect. **In** this aspect, the first inclined direction and the second inclined direction are parallel to each other. This aspect can improve a usage efficiency of the image light ray (L1) from the display element (2).

A sixth aspect is an optical system (3) based on any one of the first to fifth aspects. **In** this aspect, the diffraction structure of the exit extension region (53) is a volume holographic element positioned inside the body (50) This aspect can easily increase a size of the exit expansion region (53).

A seventh aspect is an optical system (3) based on any one of the first to sixth aspects. In this aspect, the light guide (5) further includes an auxiliary extension region (52) which is formed at the body (50) and includes a diffraction structure dividing an image light ray (L1A) propagating in a predetermined direction inside the body (50) by the incident region (51), into a plurality of image light rays (L1B) propagating in the first propagation direction, in the predetermined direction, and allowing them to travel toward the exit extension region (53). This aspect allows expansion of a pupil in a plurality of different directions.

An eighth aspect is an optical system (3) based on any one of the first to seventh aspects. In this aspect, a diffraction pitch of the exit extension region (53) is equal to or greater than $1.23 \times \lambda/n$ and equal to or smaller than $10.0 \times \lambda/n$. $\lambda$ is a wavelength of the image light ray (L1, L1A, L1B, L1C, L2). n is a refractive index of the exit extension region (53). This aspect can improve a usage efficiency of the image light ray (L1) from the display element (2) and can reduce a decrease in an image quality of the optical image (the virtual image Iv) due to a polarization state of the image light ray (L1).

A ninth aspect is an optical system (3) based on any one of the first to eighth aspects. In this aspect, a diffraction pitch of the exit extension region (53) is equal to or greater than $1.36 \times \lambda/n$ and equal to or smaller than $3.82 \times \lambda/n$. $\lambda$ is a wavelength of the image light ray (L1, L1A, L1B, L1C, L2). n is a refractive index of the exit extension region (53). This aspect can improve a usage efficiency of the image light ray (L1) from the display element (2).

A tenth aspect is an optical system (3) based on any one of the first to ninth aspects. In this aspect, a range of the incident angle θ_in greater than the exit angle θ_out by 14° or more contains a range determined by incident angles of auxiliary light beams defining both outermost edges of the image light ray incident on the exit extension region (53) regarding the predetermined plane (P1). This aspect can further improve a usage efficiency of the image light ray (L1) from the display element (2).

An eleventh aspect is an optical system (3) based on any one of the first to tenth aspects. **In** this aspect, the at least one part of the exit extension region (53) is included in an end on a side of the incident region (51), of the exit extension region (53) in an optical path of the image light ray (L1) from the incident region (51) to the exit extension region (53). This aspect can improve a usage efficiency of the image light ray (L1) from the display element (2).

A twelfth aspect is an optical system (3) based on any one of the first to eleventh aspects. In this aspect, the light guide (5) is positioned to guide the image light ray (L2) emerging from the body (50) to the field of view region (Ac) as the optical image (the virtual image Iv) by reflecting the image light ray (L2) by a light-transmissive member (the windshield 101). This aspect allows application to head-up displays.

A thirteenth aspect is an optical system (3) based on any one of the first to twelfth aspects. In this aspect, the optical system (3) further includes a projection optical system (6) allowing the image light ray (L1) to be incident on the incident region (51) of the light guide (5) as a substantial collimate light ray. This aspect can further improve a usage efficiency of the image light ray (L1) from the display element (2).

A fourteenth aspect is an image display device (1) and includes an optical system (3) based on any one of the first to thirteenth aspects, and the display element (2). This aspect can improve a usage efficiency of the image light ray (L1) from the display element (2).

The aforementioned second to thirteenth aspects are optional.

As above, as examples of techniques in the present disclosure, the embodiments are described. For this purpose, the attached drawings and the description are provided. Therefore, components described in the attached drawings and the description may include not only components necessary for solving problems but also components which are unnecessary for solving problems but useful for exemplifying the above techniques. Note that, such unnecessary components should not be considered as necessary just for the reason why such unnecessary components are described in the attached drawings and the description. Further, the embodiment described above is just prepared for exemplifying the techniques in the present disclosure and thus may be subjected to various modification, replacement, addition, omission, or the like within the scope defined by claims and those equivalent range.

INDUSTRIAL APPLICABILITY

The present disclosure is applicable to optical systems and image display devices. In more detail, the present disclosure is applicable to an optical system for guiding light from a display element to a field of view region of a user as an optical image, and an image display device including this optical system.

REFERENCE SIGNS LIST

| | |
|---|---|
| 1 | Image Display Device |
| 2 | Display Element |
| 3 | Optical System |
| 5 | Light Guide |
| 50 | Body |
| 50a | First Surface |
| 50b | Second Surface |
| 51 | Incident Region |
| 52 | Auxiliary Extension Region |
| 53 | Exit Extension Region |
| 6 | Projection Optical System |
| 100 | Movable Object |
| 101 | Wind Shield (Light-transmissive Member) |
| Ac | Field of view Region |
| D | User |
| Iv | Virtual Image (Optical Image) |
| L1, L1A, L1B, L1C, L2 | Image Light Ray |
| N | Normal Line |
| n | Refractive Index |
| P1 | Predetermined Plane |
| $\theta\_in$ | Incident Angle |
| $\theta\_out$ | Exit Angle |
| $\lambda$ | Wavelength |

**Claims**

1.  An optical system comprising a light guide for guiding an image light ray which is output from a display element and forms an image, to a field of view region of a user as an optical image,

    the light guide including:

    a body having a plate shape;
    an incident region formed at the body and allowing the image light ray to enter the body so that the image light ray propagates inside the body; and
    an exit extension region formed at the body and including a diffraction structure dividing an image light ray propagating in a first propagation direction intersecting a thickness direction of the body, into a plurality of image light rays propagating in a second propagation direction intersecting the first propagation direction, in the first propagation direction, and allowing them to emerge from the light guide, and

    at least one part of the exit extension region satisfying that

    when a refractive index of a medium on an incident side of an image light ray relative to the exit extension region and a refractive index of a medium on an exit side of an image light ray relative to the exit extension region are assumed to be equal to each other,
    an exit angle $\theta\_out$ of an image light ray emerging from the exit extension region at a highest diffraction efficiency in a predetermined plane including a normal line of the exit extension region is equal to or greater than 15° and is equal to or smaller than 45°, and
    an incident angle $\theta\_in$ of an image light ray incident on the exit extension region in the predetermined plane is greater than the exit angle $\theta\_out$ by 14° or more.

2.  The optical system according to claim 1, satisfying following formula (1);
    [FORMULA 1]

$$\sin\theta\_in > \frac{\sin\theta_{out}+1}{2} \qquad (1).$$

3. The optical system according to claim 1, satisfying following formula (2);
[FORMULA 2]

$$\theta\_in > 0.65 \times \theta\_out + 29° \qquad (2).$$

4. The optical system according to claim 1, wherein:

the body includes a first surface and a second surface in the thickness direction;
the incident region allows the image light ray incident on the first surface in a first inclined direction inclined relative to a normal line of the first surface, to enter the body so that the image light ray propagates inside the body; and
the exit extension region allows the plurality of image light rays propagating in the second propagation direction to emerge from the second surface in a second inclined direction inclined relative to a normal line of the second surface.

5. The optical system according to claim 4, wherein the first inclined direction and the second inclined direction are parallel to each other.

6. The optical system according to any one of claims 1 to 5, wherein the diffraction structure of the exit extension region is a volume holographic element positioned inside the body.

7. The optical system according to any one of claims 1 to 5, further comprising an auxiliary extension region formed at the body and including a diffraction structure dividing an image light ray propagating in a predetermined direction inside the body by the incident region, into a plurality of image light rays propagating in the first propagation direction, in the predetermined direction, and allowing them to travel toward the exit extension region.

8. The optical system according to any one of claims 1 to 5, wherein:

a diffraction pitch of the exit extension region is equal to or greater than $1.23 \times \lambda/n$ and equal to or smaller than $10.0 \times \lambda/n$;
$\lambda$ is a wavelength of the image light ray; and
n is a refractive index of the exit extension region.

9. The optical system according to any one of claims 1 to 5, wherein:

a diffraction pitch of the exit extension region is equal to or greater than $1.36 \times \lambda/n$ and equal to or smaller than $3.82 \times \lambda/n$;
$\lambda$ is a wavelength of the image light ray; and
n is a refractive index of the exit extension region.

10. The optical system according to any one of claims 1 to 5, wherein a range of the incident angle $\theta\_in$ greater than the exit angle $\theta\_out$ by 14° or more contains a range determined by incident angles of auxiliary light beams defining both outermost edges of the image light ray incident on the exit extension region regarding the predetermined plane.

11. The optical system according to any one of claims 1 to 5, wherein the at least one part of the exit extension region is included in an end on a side of the incident region, of the exit extension region in an optical path of the image light ray from the incident region to the exit extension region.

12. The optical system according to any one of claims 1 to 5, wherein the light guide is positioned to guide the image light ray emerging from the body to the field of view region as the optical image by reflecting the image light ray by a light-transmissive member.

13. The optical system according to any one of claims 1 to 5, further comprising
a projection optical system allowing the image light ray to be incident on the incident region of the light guide as a substantial collimate light ray.

**14.** An image display device comprising:

the optical system according to any one of claims 1 to 5; and
the display element.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

X2
Z2
Y2

55

Gp

55

55

## INTERNATIONAL SEARCH REPORT

| International application No. |
| --- |
| **PCT/JP2023/010420** |

### A. CLASSIFICATION OF SUBJECT MATTER

**G02B 27/01**(2006.01)i; **G02B 5/00**(2006.01)i; **G02B 5/32**(2006.01)i; **G03H 1/02**(2006.01)i; **H04N 5/64**(2006.01)i
FI:   G02B27/01; G02B5/00 C; G02B5/32; G03H1/02; H04N5/64 521Z

According to International Patent Classification (IPC) or to both national classification and IPC

### B. FIELDS SEARCHED

Minimum documentation searched (classification system followed by classification symbols)

G02B27/01; G02B5/00; G02B27/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2019/176438 A1 (SONY CORP.) 19 September 2019 (2019-09-19)<br>paragraphs [0022], [0055]-[0077], fig. 1-3, 8 | 1, 4-7, 10-14 |
| Y | JP 2002-162598 A (OLYMPUS OPTICAL CO., LTD.) 07 June 2002 (2002-06-07)<br>paragraph [0062], fig. 1, 2 | 1, 4-7, 10-14 |
| Y | JP 2019-191313 A (DENSO CORP.) 31 October 2019 (2019-10-31)<br>paragraphs [0011]-[0036], fig. 1-4 | 12 |
| A | US 2018/0164591 A1 (OCULUS VR, LLC) 14 June 2018 (2018-06-14)<br>paragraph [0027], fig. 3A-4 | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 May 2023** | **30 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/010420**

| Patent document cited in search report | | | Publication date (day/month/year) | Patent family member(s) | | | Publication date (day/month/year) |
|---|---|---|---|---|---|---|---|
| WO | 2019/176438 | A1 | 19 September 2019 | US | 2021/0026140 | A1 | |
| | | | | paragraphs [0052], [0090]-[0125], fig. 1A-3, 8A-8C | | | |
| | | | | EP | 3767370 | A1 | |
| | | | | CN | 111819488 | A | |
| | | | | KR | 10-2020-0131813 | A | |
| JP | 2002-162598 | A | 07 June 2002 | (Family: none) | | | |
| JP | 2019-191313 | A | 31 October 2019 | DE | 102019205136 | A1 | |
| | | | | paragraphs [0009]-[0034], fig. 1-4 | | | |
| US | 2018/0164591 | A1 | 14 June 2018 | WO | 2018/111483 | A1 | |
| | | | | paragraph [0027], fig. 3A-4 | | | |
| | | | | US | 2019/0391396 | A1 | |
| | | | | US | 2021/0278676 | A1 | |
| | | | | EP | 3333480 | A1 | |
| | | | | CN | 109983393 | A | |
| | | | | CN | 114442315 | A | |
| | | | | CN | 114442323 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018506068 A